# EUROPEAN PATENT APPLICATION

(11) **EP 4 685 270 A1**
(43) Date of publication of application: **28.01.2026**
(21) Application number: 25190145.0
(22) Date of filing: 17.07.2025
(51) Int. Cl.: C25B 1/04, C25B 9/60, C25B 9/73

(54) **ELECTROCHEMICAL CELL STACK**

(30) Priority: 22.07.2024 JP 2024117138
(71) Applicant: Toshiba Energy Systems & Solutions Corporation, Saiwai-ku Kawasaki-shi Kanagawa (JP)
(72) Inventor: YANAGI, Kosuke, Kawasaki-shi, Kanagawa (JP); KIKUCHI, Isamu, Kawasaki-shi, Kanagawa (JP)
(74) Representative: Hoffmann Eitle

(57) **Abstract**

According to the present embodiment, an electrochemical cell stack includes a stack, an insulating plate, a metal plate, a metal pipe, and an insulating joint. The stack is a stack of electrochemical cells. The metal pipe communicates with a communication hole of the stack which allows either the anode fluid or the cathode fluid to flow into or flow from the electrochemical cells therethrough, via a first hole of the insulating plate and a second hole of the metal plate. The insulating plate is arranged on each of an upper surface and a lower surface of the stack and made of an electrically insulating material. The metal plates sandwich the insulating plates from outside. The insulating joint insulates the metal pipe and the metal plate from each other.

## Description

### FIELD

The embodiments of the present invention relate to an electrochemical cell stack.

### BACKGROUND

An electrochemical cell applies a potential difference between an anode electrode and a cathode electrode arranged with a separator membrane such as an electrolyte membrane interposed therebetween from outside, in a state of supplying a liquid, a gas, or a fluid that is a mixture of a liquid and a gas (hereinafter, an anode fluid or a cathode fluid) to at least one of the anode electrode and the cathode electrode. Accordingly, a current is caused to flow, and ionized substances are caused to pass through the separator membrane, so that an electrochemical reaction is caused to occur. For example, this electrochemical cell stack is used for water electrolysis in which water (H₂O) is supplied to the anode side, and hydrogen (H₂) is extracted from the cathode outlet side, and carbon dioxide electrolysis in which water (H₂O) and carbon dioxide (CO₂) are supplied to the anode side and the cathode side, respectively, and carbon monoxide (CO) is extracted from the cathode outlet side. As the anode fluid or the cathode fluid, an electrolyte solution in which a small amount of ionic substance is dissolved in a liquid required for an electrochemical reaction is used in order to accelerate the reaction in some cases.

In order to supply the anode fluid and the cathode fluid to the anode electrode and the cathode electrode, respectively, a flow channel plate is installed to be adjacent to the anode electrode and the cathode electrode. Flow channels for allowing the anode fluid and the cathode fluid to flow therein are formed in the flow channel plate. The flow channel plate is made of a conductive substance so as to achieve series connection of electrodes for each of anode and cathode in a state where electrode plates and the flow channel plates are stacked.

In general, to cause the electrochemical cells to adhere to each other evenly and to cause a seal member to function, the stacked cells are sandwiched at both ends by members having high rigidity, such as metal plates. Further, to prevent a current supplied from a power supply from flowing to a grounded part through the metal plate, a plate-shaped component made of an electrically insulating material is sandwiched between a cell reactor and the metal plate, thereby preventing contact between the cell reactor and the metal plate.

Holes are provided in the metal plate for allowing the anode fluid and the cathode fluid to flow therethrough, and by attaching metal pipes to the metal plate, the fluids are caused to flow through the holes toward communication holes of the electrochemical cells.

Further, with increase in size of the electrochemical cell stack, the metal pipe is required to be formed by a member having high rigidity in order to withstand the internal pressure of the fluid. However, when metal is used for the metal pipe as the member having high rigidity, the metal pipe and the fluid have the same potential as each other. Accordingly, it is likely that the metal pipe and the metal plate need to be electrically insulated from each other.

### BRIEF DESCRIPTION OF THE DRAWINGS

FIG. 1 is a perspective view of an electrochemical cell stack according to the present embodiment;
FIG. 2 includes a front view and a side view of the electrochemical cell stack;
FIG. 3 is a perspective view of an electrochemical cell according to the present embodiment;
FIG. 4 is a cross-sectional view along a line C-C in FIG. 3;
FIG. 5 is an exploded perspective view of an electrode plate and an electrode-plate outer frame according to the present embodiment;
FIG. 6 is a plan view of the electrode plate and the electrode-plate outer frame according to the present embodiment;
FIG. 7 is a back view of the electrode plate and the electrode-plate outer frame illustrated in FIG. 6;
FIG. 8 is a cross-sectional view along a line D-D in FIG. 6;
FIG. 9 is an exploded perspective view of a flow channel plate and a flow-channel-plate outer frame according to the present embodiment;
FIG. 10 is a plan view of the flow channel plate and the flow-channel-plate outer frame according to the present embodiment;
FIG. 11 is a back view of the flow channel plate and the flow-channel-plate outer frame illustrated in FIG. 10;
FIG. 12 is a cross-sectional view along a line E-E in FIG. 10;
FIG. 13 is a diagram illustrating a stack of electrochemical cells;
FIG. 14 is a cross-sectional view along a line A-A in FIG. 2;
FIG. 15 is a cross-sectional view along a line B-B in FIG. 2;
FIG. 16 is a cross-sectional view corresponding to the cross-sectional view along the line A-A in FIG. 2;
FIG. 17 is a cross-sectional view corresponding to the cross-sectional view along the line B-B in FIG. 2;
FIG. 18 is a perspective view of an electrochemical cell stack according to a comparative example;
FIG. 19 is a cross-sectional view along the line B-B in FIG. 2, which illustrates an example of an insulating joint not including a convex part; and
FIG. 20 is a cross-sectional view along the line B-B in FIG. 2, which illustrates an example of an insulating joint including a shorter convex part.

### DETAILED DESCRIPTION

An electrochemical cell stack according to the embodiment of the present invention includes a stack, an insulating plate, a metal plate, a metal pipe, and an insulating joint. The stack is a stack of electrochemical cells each including an electrode plate that has a separator membrane, an anode electrode arranged on one main surface of the separator membrane, and a cathode electrode arranged on the other main surface of the separator membrane, and a flow channel plate stacked on the electrode plate and having an anode flow channel that is arranged to be opposed to the anode electrode and allows an anode fluid to flow therein and a cathode flow channel that is arranged to be opposed to the cathode electrode and allows a cathode fluid to flow therein. The metal pipe communicates with a communication hole of the stack which allows either the anode fluid or the cathode fluid to flow into or flow from the electrochemical cells therethrough, via a first hole of the insulating plate and a second hole of the metal plate. The insulating plate is arranged on each of an upper surface and a lower surface of the stack and made of an electrically insulating material. The metal plates sandwich the insulating plates from outside. The insulating joint insulates the metal pipe and the metal plate from each other.

An electrochemical cell stack according to embodiments of the present invention will now be explained below in detail with reference to the drawings. The embodiments described below are only examples of the embodiments of the present invention and are not intended to limit the present invention. In the drawings referred to in the embodiments, the same parts or parts having identical functions are denoted by like or similar reference characters and redundant explanations thereof may be omitted. Further, there are cases where some part of configurations is omitted from the drawings.

### (First embodiment)

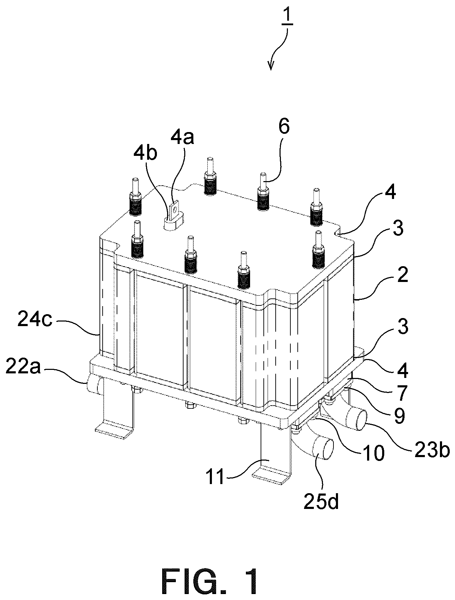

First, a configuration example of an electrochemical cell stack and an electrochemical cell according to the present embodiment is described with reference to FIGS. 1 to 13.

### [Configuration of electrochemical cell stack]

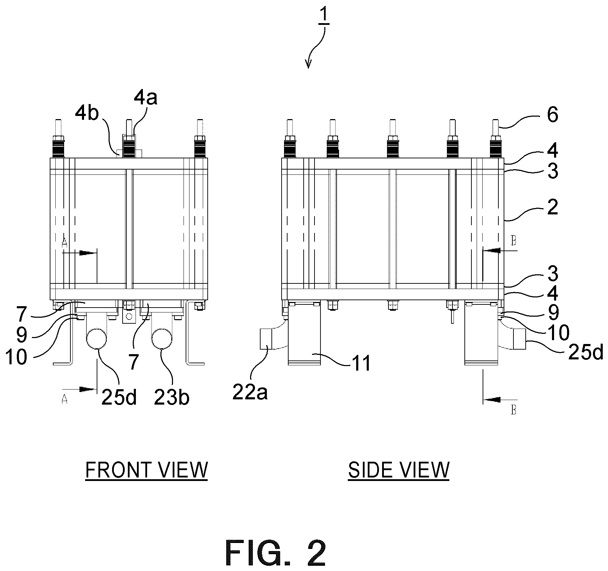

FIG. 1 is a perspective view of an electrochemical cell stack 1 according to the present embodiment. FIG. 2 includes a front view and a side view of the electrochemical cell stack 1. As illustrated in FIGS. 1 and 2, the electrochemical cell stack 1 according to the present embodiment includes a plurality of electrochemical cells 2 stacked on each other. That is, the electrochemical cell stack 1 is configured by the stacked electrochemical cells 2.

As illustrated in FIGS. 1 and 2, the electrochemical cell stack 1 includes insulating plates 3 and metal plates 4. The insulating plate 3 is a plate-shaped insulator made of an electrically insulating material. The insulating plate 3 is arranged at each end of the stacked electrochemical cells 2 in the stacking direction.

The metal plate 4 is a plate-shaped conductor. The metal plate 4 is arranged on an upper end surface of the upper insulating plate 3 and a lower end surface of the lower insulating plate 3. That is, the metal plates 4 are arranged to sandwich the insulating plates 3 therebetween. The metal plates 4 may be embedded in the respective insulating plates 3. The metal plates 4 have a ground potential, for example.

The upper metal plate 4 has a terminal 4a protruding outward. An insulated bush 4b is provided between the upper metal plate 4 and the terminal 4a. This terminal 4a is electrically connected to an external power supply via a cable or the like. Accordingly, it is possible to apply a voltage to each electrochemical cell 2 from the external power supply to cause a current to flow.

The upper surface of the upper metal plate 4 and the lower surface of the lower metal plate 4 are fixed by tie rods 6. Clamping plates may be provided on the upper surface of the upper metal plate 4 and the lower surface of the lower metal plate 4. The clamping force by the tie rods 6 clamps the electrochemical cells 2 in a direction in which the electrochemical cells 2 are closer to each other.

As illustrated in FIG. 1, the electrochemical cell stack 1 further includes insulating joints 7 and metal pipes 22a, 23b, 24c, and 25d. A first hole is provided in the insulating plate 3. A second hole having a larger inner diameter than the inner diameter of the first hole is provided in the metal plate 4 to correspond to the first hole. By providing the first and second holes and attaching the metal pipes, a fluid is caused to flow toward a communication hole of the electrochemical cells. That is, the anode-fluid inflow metal pipe 22a, the anode-fluid outflow metal pipe 23b, the cathode-fluid inflow metal pipe 24c, and the cathode-fluid outflow metal pipe 25d are installed in the metal plate 4.

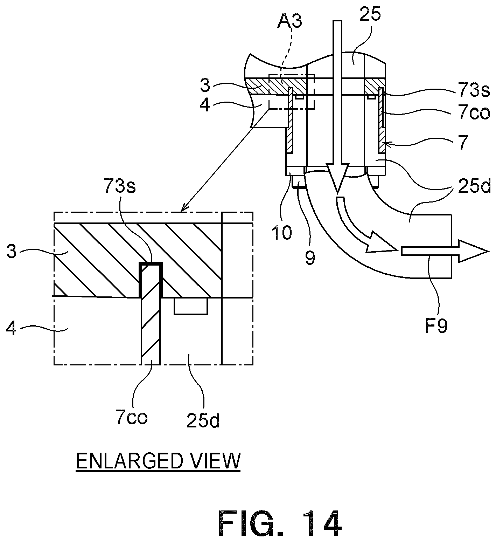

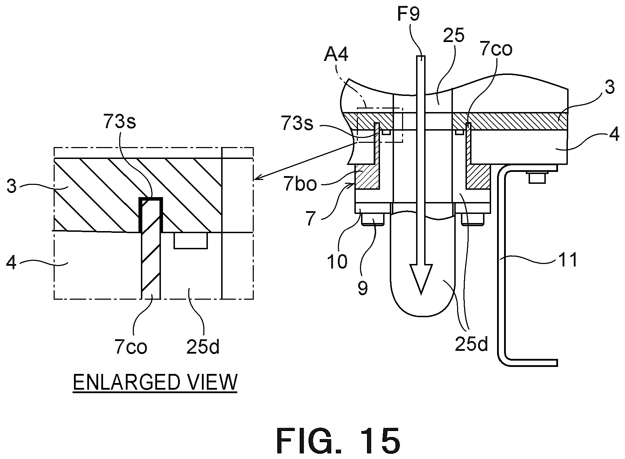

Further, as illustrated in FIG. 1, the lower metal plate 4 includes the anode-fluid inflow metal pipe 22a, the anode-fluid outflow metal pipe 23b, the cathode-fluid inflow metal pipe 24c, and the cathode-fluid outflow metal pipe 25d. These metal pipes 22a, 23b, 24c, and 25d are arranged on the lower metal plate 4 via the insulating joints 7. The anode-fluid inflow metal pipe 22a communicates with anode-fluid-inlet communication holes 12 and 22 of the electrochemical cells 2 described later. The anode-fluid outflow metal pipe 23b communicates with anode-fluid-outlet communication holes 13 and 23 of the electrochemical cells 2 described later. The cathode-fluid inflow metal pipe 24c communicates with cathode-fluid-inlet communication holes 14 and 24 of the electrochemical cells 2 described later. The cathode-fluid outflow metal pipe 25d communicates with cathode-fluid-outlet communication holes 15 and 25 of the electrochemical cells 2 described later. An anode fluid supplied from outside flows into the anode-fluid inflow metal pipe 22a. The anode fluid after an electrochemical reaction by each electrochemical cell 2 flows to outside through the anode-fluid outflow metal pipe 23b. A cathode fluid supplied from outside flows into the cathode-fluid inflow metal pipe 24c. The cathode fluid after an electrochemical reaction by each electrochemical cell 2 flows to outside through the cathode-fluid outflow metal pipe 25d. A detailed configuration example of the insulating joint 7 and the metal pipe 22a, 23b, 24c, or 25d in a cross-section along a line A-A and a cross-section along a line B-B will be described later by way of FIGS. 14 and 15.

### [Configuration of electrochemical cell]

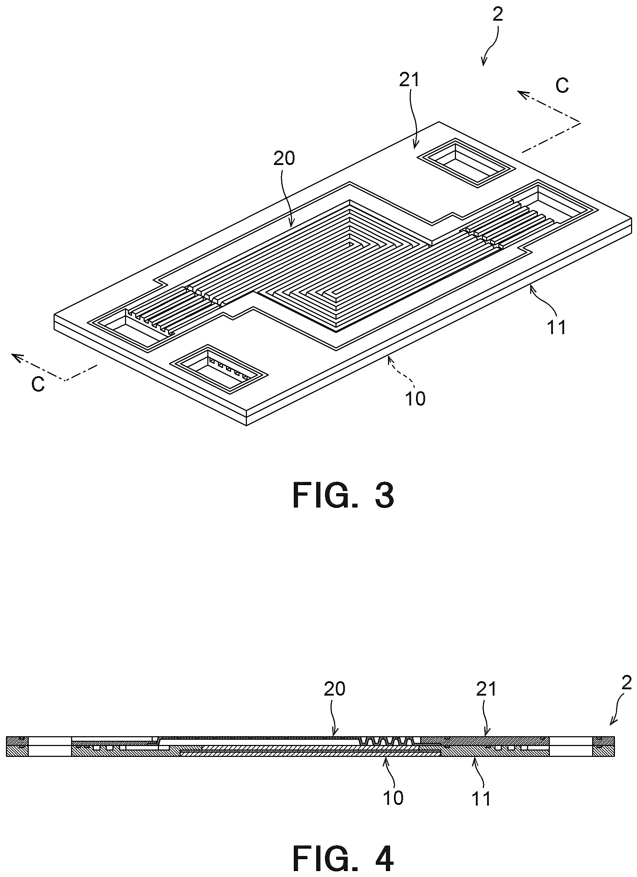

FIG. 3 is a perspective view of the electrochemical cell 2 according to the present embodiment. FIG. 4 is a cross-sectional view along a line C-C in FIG. 3. As illustrated in FIGS. 3 and 4, the electrochemical cell 2 according to the present embodiment includes an electrode plate 10 and an electrode-plate outer frame 11, and a flow channel plate 20 and a flow-channel-plate outer frame 21. The electrochemical cell 2 has a configuration in which, regarding the electrode plate 10, the electrode-plate outer frame 11, the flow channel plate 20, and the flow-channel-plate outer frame 21 as one set, such sets are stacked on each other.

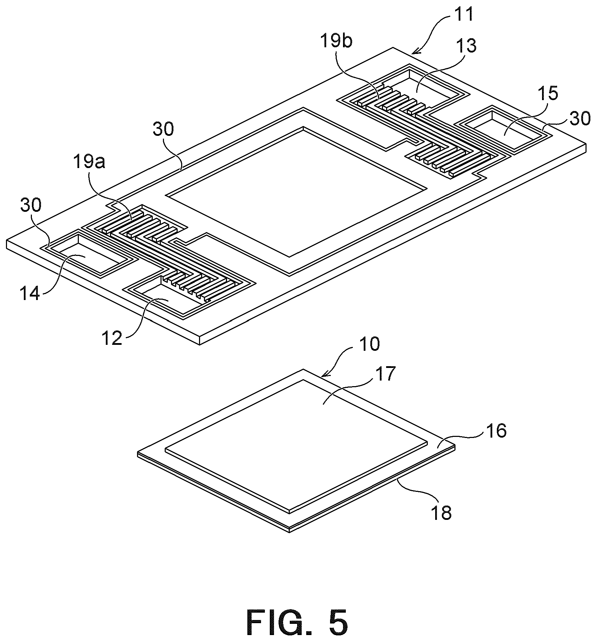

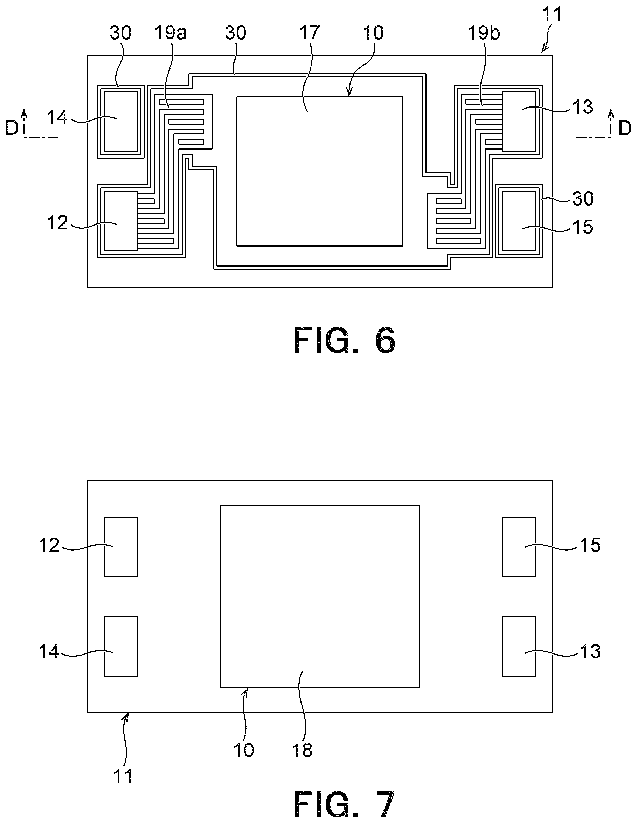

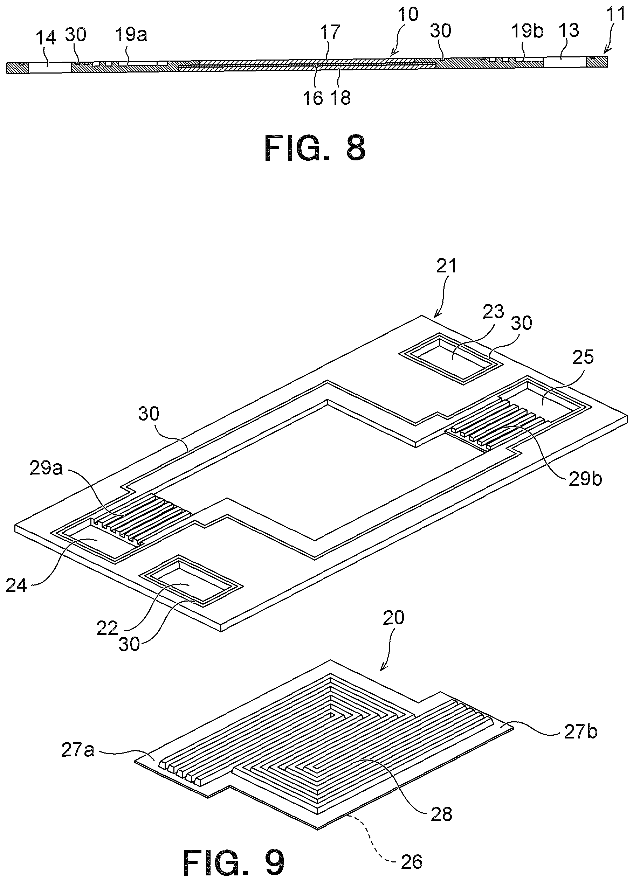

FIG. 5 is an exploded perspective view of the electrode plate 10 and the electrode-plate outer frame 11 according to the present embodiment. FIG. 6 is a plan view of the electrode plate 10 and the electrode-plate outer frame 11 according to the present embodiment. FIG. 7 is a back view of the electrode plate 10 and the electrode-plate outer frame 11 illustrated in FIG. 6. FIG. 8 is a cross-sectional view along a line D-D in FIG. 6.

As illustrated in FIG. 5, the electrode plate 10 according to the present embodiment includes a separator membrane 16, an anode electrode 17, and a cathode electrode 18. The anode electrode 17 and the cathode electrode 18 are arranged with the separator membrane 16 sandwiched therebetween. That is, the anode electrode 17 and the cathode electrode 18 are arranged both sides of the separator membrane 16, respectively. The anode electrode 17 is arranged on one of main surfaces of the separator membrane 16 (on the upper side in FIGS. 5 and 8), and the cathode electrode 18 is arranged on the other main surface of the separator membrane 16 (on the lower side in FIGS. 5 and 8).

The separator membrane 16 may be an ion filtration membrane such as a solid polymer membrane (ion exchange membrane) and a solid electrolyte membrane (electrolyte membrane). The anode electrode 17 and the cathode electrode 18 may be configured by a gas permeable substrate made of carbon or metal as a raw material and a catalyst adhering to the substrate, the catalyst containing metal such as nickel, iridium, gold, silver, or platinum, or a metal oxide such as nickel oxide, iridium dioxide, or cobalt oxide.

As illustrated in FIG. 5, each of the separator membrane 16, the anode electrode 17, and the cathode electrode 18 may be formed in a flat plate shape. As illustrated in FIG. 5, the cathode electrode 18 may have the same planar size as the separator membrane 16. Meanwhile, the anode electrode 17 may have a smaller planar size than the separator membrane 16. With this configuration, as illustrated in FIGS. 5 and 8, a step may be formed between the anode electrode 17 and the separator membrane 16.

As illustrated in FIGS. 5 to 8, the electrode-plate outer frame 11 is arranged outside the electrode plate 10. The electrode-plate outer frame 11 is joined to the electrode plate 10. The electrode-plate outer frame 11 may be joined to the outer circumference of the electrode plate 10. Further, as illustrated in FIGS. 5 and 8, the electrode-plate outer frame 11 may be joined to the electrode plate 10 while overlapping the electrode plate 10 to cover the step between the anode electrode 17 and the separator membrane 16 in the stacking direction. In this case, the joined area of the joint between the electrode plate 10 and the electrode-plate outer frame 11 can be made wider, so that the sealing property at the joint can be improved.

As illustrated in FIGS. 5 to 8, the electrode-plate outer frame 11 has the anode-fluid-inlet communication hole 12, the anode-fluid-outlet communication hole 13, the cathode-fluid-inlet communication hole 14, and the cathode-fluid-outlet communication hole 15. The respective communication holes 12, 13, 14, and 15 are provided at positions distant from the electrode plate 10. These communication holes 12, 13, 14, and 15 each penetrate through the electrode-plate outer frame 11 in the thickness direction (stacking direction).

As illustrated in FIGS. 5 and 6, the electrode-plate outer frame 11 has anode communication grooves 19a and 19b. The anode communication groove 19a makes the anode-fluid-inlet communication hole 12 and an anode flow channel 26 of the flow channel plate 20 communicate with each other. That is, the anode communication groove 19a allows the anode fluid to flow from the anode-fluid-inlet communication hole 12 to the anode flow channel 26 of the flow channel plate 20. The anode communication groove 19b makes the anode flow channel 26 of the flow channel plate 20 and the anode-fluid-outlet communication hole 13 communicate with each other. That is, the anode communication groove 19b allows the anode fluid to flow from the anode flow channel 26 of the flow channel plate 20 to the anode-fluid-outlet communication hole 13.

As illustrated in FIGS. 5 and 6, each of the anode communication grooves 19a and 19b may include a plurality of groove parts formed on a surface of the electrode-plate outer frame 11. That is, each of the anode communication grooves 19a and 19b may be configured by the groove parts in which the anode fluid flows. Further, as illustrated in FIGS. 5 and 6, the anode communication grooves 19a and 19b may extend from the communication holes 12 and 13, respectively. Meanwhile, it is allowable that the anode communication grooves 19a and 19b do not extend to the electrode plate 10. That is, the anode communication grooves 19a and 19b may be apart from the electrode plate 10. As illustrated in FIGS. 5 and 6, the anode communication grooves 19a and 19b may be serpentine flow channels each having a plurality of bending parts.

As illustrated in FIGS. 5 and 6, the electrode-plate outer frame 11 may include a stacked sealing member 30. The stacked sealing member 30 may be provided to surround the anode-fluid-inlet communication hole 12, the anode communication groove 19a, the electrode plate 10, the anode communication groove 19b, and the anode-fluid-outlet communication hole 13. Further, the stacked sealing member 30 may be provided to surround the cathode-fluid-inlet communication hole 14. Furthermore, the stacked sealing member 30 may be provided to surround the cathode-fluid-outlet communication hole 15.

The stacked sealing member 30 is a member for sealing gaps between members including the electrode plate 10, the electrode-plate outer frame 11, the flow channel plate 20, and the flow-channel-plate outer frame 21 to prevent the anode fluid or the cathode fluid from flowing to outside when the electrode plate 10 and the electrode-plate outer frame 11, and the flow channel plate 20 and the flow-channel-plate outer frame 21 are stacked. The stacked sealing member 30 may be an elastic member such as rubber. In this case, when the electrode plate 10 and the electrode-plate outer frame 11, and the flow channel plate 20 and the flow-channel-plate outer frame 21 are stacked and clamped in such a direction that the members come closer to each other, the stacked sealing member 30 is compressed between the electrode-plate outer frame 11 and the flow-channel-plate outer frame 21, so that the gap between the members can be sealed by the reaction force. Alternatively, the sealing member 30 may be an adhesive. In this case, when the electrode plate 10 and the electrode-plate outer frame 11, and the flow channel plate 20 and the flow-channel-plate outer frame 21 are stacked and clamped in such a direction that the members come closer to each other, the electrode-plate outer frame 11 and the flow-channel-plate outer frame 21 are made to adhere to each other, so that the gap between the members can be sealed.

The electrode-plate outer frame 11 may be made of an electrically insulating material, for example, a resin material such as a fluororesin, polyethylene terephthalate (PET), polyphenylene sulfide (PPS), and polyethylene naphthalate (PEN), or a rubber material such as fluororubber, ethylene propylene diene monomer (EPDM), and silicone rubber. Alternatively, the electrode-plate outer frame 11 may be configured by a conductive substrate the surface of which is coated with an electrically insulating material. It suffices that the electrode-plate outer frame 11 is provided with the electrically insulating material at least at portions to be in contact with the anode fluid and the cathode fluid.

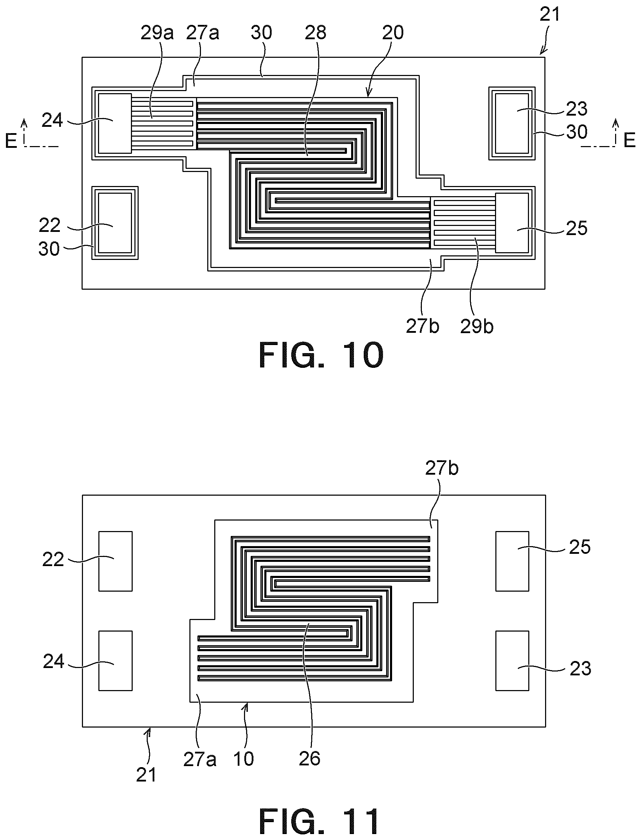

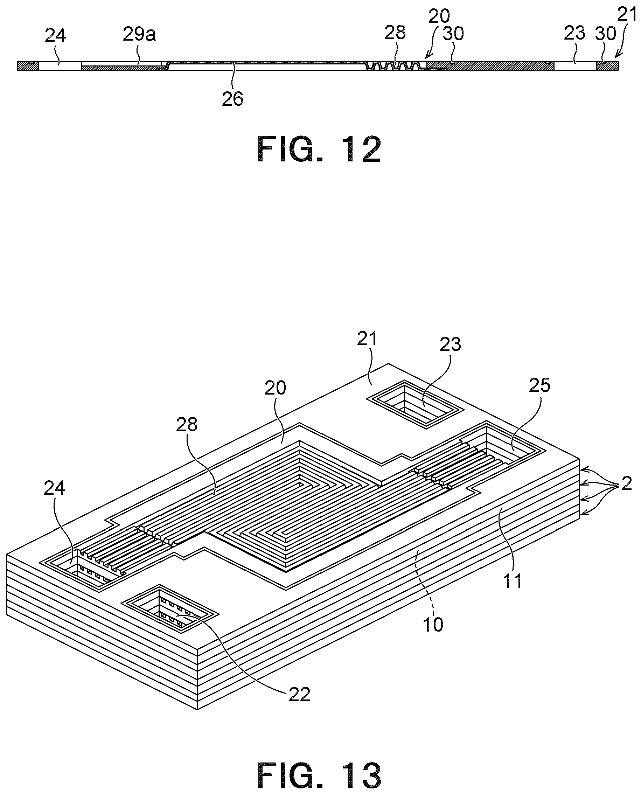

FIG. 9 is an exploded perspective view of the flow channel plate 20 and the flow-channel-plate outer frame 21 according to the present embodiment. FIG. 10 is a plan view of the flow channel plate 20 and the flow-channel-plate outer frame 21 according to the present embodiment. FIG. 11 is a back view of the flow channel plate 20 and the flow-channel-plate outer frame 21 illustrated in FIG. 10. FIG. 12 is a cross-sectional view along a line E-E in FIG. 10. FIG. 13 is a diagram illustrating a stack of the electrochemical cells 2.

As illustrated in FIGS. 9 to 13, the flow channel plate 20 according to the present embodiment includes the anode flow channel 26 and a cathode flow channel 28. The anode flow channel 26 and the cathode flow channel 28 are arranged on both surfaces of the flow channel plate 20. The anode flow channel 26 is arranged on the anode electrode 17 side surface of the flow channel plate 20 (on the lower side in FIGS. 9 and 12), and the cathode flow channel 28 is arranged in the cathode electrode 18 side surface of the flow channel plate 20 (on the upper side in FIGS. 9 and 12). The anode flow channel 26 is arranged to be opposed to the anode electrode 17 of the electrode plate 10. The cathode flow channel 28 is arranged to be opposed to the cathode electrode 18 of the electrode plate 10.

The anode flow channel 26 is configured to allow an anode fluid to flow therein. As illustrated in FIGS. 11 and 12, the anode flow channel 26 may include a plurality of recesses recessed from one of the main surfaces of the flow channel plate 20. That is, the anode flow channel 26 may be configured by the recesses in which the anode fluid flows. It can also be said that the anode flow channel 26 includes a plurality of projections projecting from the bottom of groove (the bottom of each recess) in the flow channel plate 20, and it can also be said that the anode flow channel 26 is configured by the projections between which the anode fluid flows. As illustrated in FIG. 11, the anode flow channel 26 may be a serpentine flow channel having a plurality of bending parts.

The cathode flow channel 28 is configured to allow a cathode fluid to flow therein. As illustrated in FIGS. 9, 10, and 12, the cathode flow channel 28 may include a plurality of projections projecting from the other main surface of the flow channel plate 20. That is, the cathode flow channel 28 may be configured by the projections between which the cathode fluid flows. As illustrated in FIGS. 9 and 10, the cathode flow channel 28 may be a serpentine flow channel having a plurality of bending parts.

The anode flow channel 26 and the cathode flow channel 28 may be formed by pressing a thin plate, which is to serve as the flow channel plate 20, from one of the main surfaces. That is, by pressing, the recesses may be formed in one of the main surfaces of the flow channel plate 20, the projections may be formed on the other main surface, the recesses in the one main surface may be used as the anode flow channel 26, and the projections on the other main surface may be used as the cathode flow channel 28. By forming the anode flow channel 26 and the cathode flow channel 28 by pressing, it is possible to facilitate mass production of the flow channel plate 20, thereby reducing the manufacturing cost of the electrochemical cell 2.

Further, as illustrated in FIGS. 9 to 13, the flow channel plate 20 may have protrusions 27a and 27b protruding outward compared to the anode electrode 17 and the cathode electrode 18 in plan view. The protrusion 27a protrudes toward the cathode-fluid-inlet communication hole 24 of the flow-channel-plate outer frame 21 described later. The protrusion 27b protrudes toward the cathode-fluid-outlet communication hole 25 of the flow-channel-plate outer frame 21 described later.

As illustrated in FIG. 11, a flow channel continuous from the anode flow channel 26 is provided in each of the protrusions 27a and 27b. That is, the anode flow channel 26 is formed to extend to the protrusions 27a and 27b. The anode flow channels 26 in the protrusions 27a and 27b are opposed to ends on the electrode plate 10 side of the anode communication grooves 19a and 19b of the electrode-plate outer frame 11 in the stacking direction and communicate with the anode communication grooves 19a and 19b in the stacking direction, respectively. Accordingly, the anode fluid that has flowed in the anode communication groove 19a of the electrode-plate outer frame 11 flows in the stacking direction and flows into the anode flow channel 26 of the flow channel plate 20. The anode fluid that has flowed in the anode flow channel 26 of the flow channel plate 20 then flows in the stacking direction and flows into the anode communication groove 19b of the electrode-plate outer frame 11.

Further, as illustrated in FIG. 10, a flow channel continuous from the cathode flow channel 28 is provided in each of the protrusions 27a and 27b. That is, the cathode flow channel 28 is formed to extend to the protrusions 27a and 27b. The cathode flow channels 28 in the protrusions 27a and 27b extend to cathode communication grooves 29a and 29b of the flow-channel-plate outer frame 21 described later and communicate with the cathode communication grooves 29a and 29b, respectively. Accordingly, the cathode fluid that has flowed in the cathode communication groove 29a of the flow-channel-plate outer frame 21 flows into the cathode flow channel 28 of the flow channel plate 20. The cathode fluid that has flowed in the cathode flow channel 28 of the flow channel plate 20 then flows into the cathode communication groove 29b of the flow-channel-plate outer frame 21.

The flow channel plate 20 may be made of a conductive material such as carbon, a mixture of carbon and a resin, and metal. Alternatively, the flow channel plate 20 may be configured by a conductive material the surface of which is coated with a conductive coating agent for the purpose of raising a corrosion potential, reducing contact resistance, or the like.

As illustrated in FIGS. 9 to 13, the flow-channel-plate outer frame 21 is arranged outside the flow channel plate 20. The flow-channel-plate outer frame 21 is joined to the flow channel plate 20. The flow-channel-plate outer frame 21 may be joined to the outer circumference of the flow channel plate 20. Further, as illustrated in FIGS. 9 and 12, the flow-channel-plate outer frame 21 may be joined while being overlapped on a part of the flow channel plate 20 in which no flow channel is formed in the stacking direction. In this case, the joined area of the joint between the flow cannel plate 20 and the flow-channel-plate outer frame 21 can be made wider, so that the sealing property at the joint can be improved.

As illustrated in FIGS. 9 to 13, the flow-channel-plate outer frame 21 has the anode-fluid-inlet communication hole 22, the anode-fluid-outlet communication hole 23, the cathode-fluid-inlet communication hole 24, and the cathode-fluid-outlet communication hole 25. The respective communication holes 22, 23, 24, and 25 are provided at positions distant from the flow channel plate 20. These communication holes 22, 23, 24, and 25 penetrate through the flow-channel-plate outer frame 21 in the thickness direction (stacking direction).

As illustrated in FIGS. 3 and 4, in a state where the electrode plate 10 and the electrode-plate outer frame 11, and the flow channel plate 20 and the flow-channel-plate outer frame 21 are stacked, the communication holes 22, 23, 24, and 25 overlap the corresponding communication holes 12, 13, 14, and 15, respectively. That is, the anode-fluid-inlet communication hole 12, the anode-fluid-outlet communication hole 13, the cathode-fluid-inlet communication hole 14, and the cathode-fluid-outlet communication hole 15 communicate with the anode-fluid-inlet communication hole 22, the anode-fluid-outlet communication hole 23, the cathode-fluid-inlet communication hole 24, and the cathode-fluid-outlet communication hole 25 in the stacking direction, respectively. Further, the anode-fluid-inlet communication holes 12 and 22 communicate with the anode-fluid inflow metal pipe 22a, the anode-fluid-outlet communication holes 13 and 23 communicate with the anode-fluid outflow metal pipe 23b, the cathode-fluid-inlet communication holes 14 and 24 communicate with the cathode-fluid inflow metal pipe 24c, and the cathode-fluid outflow metal pipe 25d communicates with the cathode-fluid-outlet communication holes 15 and 25. The anode fluid supplied from outside flows into the anode-fluid-inlet communication holes 12 and 22 through the anode-fluid inflow metal pipe 22a. The anode fluid after an electrochemical reaction which has flowed in the anode flow channel 26 flows to outside from the anode-fluid-outlet communication holes 13 and 23 through the anode-fluid outflow metal pipe 23b. The cathode fluid supplied from outside flows into the cathode-fluid-inlet communication holes 14 and 24 through the cathode-fluid inflow metal pipe 24c. The cathode fluid after an electrochemical reaction which has flowed in the cathode flow channel 28 flows to outside from the cathode-fluid-outlet communication holes 15 and 25 through the cathode-fluid outflow metal pipe 25d.

Further, as illustrated in FIGS. 9 and 10, the flow-channel-plate outer frame 21 has the cathode communication grooves 29a and 29b. The cathode communication groove 29a makes the cathode-fluid-inlet communication hole 24 and the cathode flow channel 28 of the flow channel plate 20 communicate with each other therethrough. That is, the cathode communication groove 29a allows the cathode fluid to flow from the cathode-fluid-inlet communication hole 24 to the cathode flow channel 28 of the flow channel plate 20. The cathode communication groove 29b makes the cathode flow channel 28 of the flow channel plate 20 and the cathode-fluid-outlet communication hole 25 communicate with each other therethrough. That is, the cathode communication groove 29b allows the cathode fluid to flow from the cathode flow channel 28 of the flow channel plate 20 to the cathode-fluid-outlet communication hole 25.

As illustrated in FIGS. 9 and 10, each of the cathode communication grooves 29a and 29b may include a plurality of groove parts formed on a surface of the flow-channel-plate outer frame 21. That is, each of the cathode communication grooves 29a and 29b may be configured by the groove parts in which the cathode fluid flows. Further, as illustrated in FIGS. 9 and 10, the cathode communication grooves 29a and 29b may extend from the communication holes 24 and 25 to the flow channel plate 20. Furthermore, as illustrated in FIGS. 9 and 10, the cathode communication grooves 29a and 29b may be parallel flow channels extending linearly.

As illustrated in FIGS. 9 and 10, the flow-channel-plate outer frame 21 has the stacked sealing member 30, similarly to the electrode-plate outer frame 11. The stacked sealing member 30 may be provided to surround the cathode-fluid-inlet communication hole 24, the cathode communication groove 29a, the flow channel plate 20, the cathode communication groove 29b, and the cathode-fluid-outlet communication hole 25. Further, the stacked sealing member 30 may be provided to surround the anode-fluid-inlet communication hole 22. Furthermore, the stacked sealing member 30 may be provided to surround the anode-fluid-outlet communication hole 23.

The flow-channel-plate outer frame 21 may be made of an electrically insulating material, for example, a resin material such as a fluororesin, polyethylene terephthalate (PET), polyphenylene sulfide (PPS), and polyethylene naphthalate (PEN) and a rubber material such as fluororubber, ethylene propylene diene monomer (EPDM), and silicone rubber. Alternatively, the flow-channel-plate outer frame 21 may be configured by a conductive substrate the surface of which is coated with an electrically insulating material. It suffices that the flow-channel-plate outer frame 21 is provided with the electrically insulating material at least at portions in contact with the anode fluid and the cathode fluid.

### [Operation example of electrochemical cell stack]

An operation example of the electrochemical cell stack 1 according to the present embodiment having the configuration described above is described. First, a cathode fluid and an anode fluid are supplied to the electrochemical cell stack 1. The cathode fluid supplied to the electrochemical cell stack 1 flows into the cathode-fluid-inlet communication holes 14 and 24 of each electrochemical cell 2 through the cathode-fluid inflow metal pipe 24c. The cathode fluid then flows into the cathode communication groove 29a of the flow-channel-plate outer frame 21 from the cathode-fluid-inlet communication holes 14 and 24 and flows in the cathode communication groove 29a. Next, the cathode fluid reaching an end of the cathode communication groove 29a on the flow channel plate 20 side flows into the cathode flow channel 28 of the flow channel plate 20. The cathode fluid then flows in the cathode flow channel 28 while being in contact with the cathode electrode 18 of the electrode plate 10.

The anode fluid supplied to the electrochemical cell stack 1 flows into the anode-fluid-inlet communication holes 12 and 22 of each electrochemical cell 2 through the anode-fluid inflow metal pipe 22a. The anode fluid then flows into the anode communication groove 19a of the electrode-plate outer frame 11 from the anode-fluid-inlet communication holes 12 and 22 and flows in the anode communication groove 19a. Next, the anode fluid reaching an end of the anode communication groove 19a on the electrode plate 10 side flows in the stacking direction and flows into the anode flow channel 26 of the flow channel plate 20. The anode fluid then flows in the anode flow channel 26 of the flow channel plate 20 while being in contact with the anode electrode 17 of the electrode plate 10.

At least a portion of constituents of the cathode fluid in contact with the cathode electrode 18 and at least a portion of constituents of the anode fluid in contact with the anode electrode 17 each react with a catalyst adhering to the corresponding electrode to be ionized. When a predetermined voltage is applied across both ends in the stacking direction of the electrochemical cell stack 1 in this state, a potential difference is generated between the cathode electrode 18 and the anode electrode 17 with the separator membrane 16, which is electrically insulating, of the electrode plate 10 sandwiched therebetween. Accordingly, by passing of an ionized specific substance in the fluid through the separator membrane 16, an electrochemical reaction occurs in which the material compositions of the cathode fluid and the anode fluid change.

For example, by supplying water (H₂O) to the anode side, a reaction of water electrolysis in which hydrogen (H₂) is extracted from the cathode outlet side can be obtained. Further, by supplying water (H₂O) to the anode side and carbon dioxide (CO₂) to the cathode side, a reaction of carbon dioxide electrolysis in which a mixed gas containing carbon monoxide (CO) is extracted from the cathode outlet side can be obtained, for example.

The cathode fluid after the electrochemical reaction flows into the cathode communication groove 29b of the flow-channel-plate outer frame 21 from the cathode flow channel 28 of the flow channel plate 20. The cathode fluid then flows in the cathode communication groove 29b of the flow-channel-plate outer frame 21. Next, the cathode fluid having flowed in the cathode communication groove 29b of the flow-channel-plate outer frame 21 reaches the cathode-fluid-outlet communication holes 15 and 25. The cathode fluid then flows to outside from the cathode-fluid-outlet communication holes 15 and 25 through the cathode-fluid outflow metal pipe 25d.

The anode fluid after the electrochemical reaction flows in the stacking direction from the anode flow channel 26 of the flow channel plate 20 and then flows into the anode communication groove 19b of the electrode-plate outer frame 11. The anode fluid then flows in the anode communication groove 19a of the electrode-plate outer frame 11. Next, the anode fluid having flowed in the anode communication groove 19b of the electrode-plate outer frame 11 reaches the anode-fluid-outlet communication holes 13 and 23. The anode fluid then flows to outside from the anode-fluid-outlet communication holes 13 and 23 through the anode-fluid outflow metal pipe 23b.

### [Configuration example of insulating joints and metal pipes]

Details of a configuration example of the insulating joints 7 and the metal pipes 22a, 23b, 24c, and 25d are described by way of FIGS. 14 and 15, with reference to FIGS. 1 and 2. FIG. 14 is a cross-sectional view along the line A-A in FIG. 2. FIG. 15 is a cross-sectional view along the line B-B in FIG. 2. FIG. 14 also includes an enlarged view of a region A3, and FIG. 15 also includes an enlarged view of a region A4.

The metal pipes 22a, 23b, 24c, and 25d are formed by metal members having high rigidity, for example, metal plates in order to withstand the internal pressure of the anode fluid or the cathode fluid. In this case, since the metal pipes 22a, 23b, 24c, and 25d formed by the metal members have the same potential as that of an anode fluid F9 or a cathode fluid F9, the metal plate 4 and the metal pipes 22a, 23b, 24c, and 25d need to be electrically insulated from each other. Therefore, the insulating joint 7 made of an electrically insulating material is interposed between the metal plate 4 and each metal pipe 22a, 23b, 24c, or 25d to achieve electrical insulation.

As illustrated in FIGS. 14 and 15, the insulating joint 7 includes a body 7bo connected to the outer circumference of the cathode-fluid outflow metal pipe 25d to surround it and a convex part 7co integrally formed with the body 7bo and inserted into a gap of a concave structure of the insulating plate 3 to surround the wall surface in the gap. Although the configuration of the insulating joint 7 is described by referring to the one provided for the cathode-fluid outflow metal pipe 25d here, the insulating joints 7 having an identical shape are also provided for the metal pipes 22a, 23b, and 24c.

In a flat plate part of the insulating plate 3 surrounded by an upper end of the inner wall of the second hole of the metal plate 4, the gap of the concave structure surrounding the first hole of the insulating plate is formed. That is, in the insulating plate 3, an annular groove part 73S being the gap of the concave structure is provided along the outer circumference of the cathode-fluid outflow metal pipe 25d.

The convex part 7co of the insulating joint 7 is fitted into the annular groove part 73S. For example, in a case where the outer circumference of the cathode-fluid outflow metal pipe 25d is circular, the groove part 73S is a circular groove. Alternatively, in a case where the outer circumference of the cathode-fluid outflow metal pipe 25d is square, the groove part 73S is a square groove. With this configuration of the insulating joint 7, the cathode-fluid outflow metal pipe 25d and the metal plate 4 are insulated from each other. Although the cross-section of the convex part 7co is square in the present embodiment, the shape is not limited thereto. For example, the cross-section of an end of the convex part 7co may be circular or triangular. Further, the shape of the groove part 73S can also have any shape, as long as it allows insertion of the convex part 7co thereto.

### [Clearance distance and creepage distance]

In general, it is necessary to satisfy a clearance distance and a creepage distance for achieving insulation between conductive parts. The clearance distance is the shortest distance in space between the conductive parts. For example, in a case where the groove part 73S is located between the metal pipe 25d and the metal plate 4 that are conductive parts, the distance in space is measured as the clearance distance while the groove part 73S is ignored. Meanwhile, since the convex part 7co of the insulating joint 7 is fitted into the groove part 73S in the present embodiment, this configuration is a condition for satisfying the creepage distance.

The creepage distance is defined as the shortest distance between two conductive members separated by an insulating barrier, along a surface of an insulator. For example, the creepage distance between the metal pipe 25d and the metal plate 4 is the distance along the inner surface of the groove part 73S of the insulating plate 3. That is, by insertion of the convex part 7co into the groove part 73S that is the gap of the concave structure of the insulating plate 3, the creepage distance is formed in a U-shape along the inner surface of the groove part 73S of the insulating plate 3. In other words, in a case of fitting the convex part 7co into the groove part 73S, it is possible to make the difference between the inner diameter and the outer diameter of the convex part 7co smaller with increase in the depth of the groove part 73S. That is, as the groove part 73S is made deeper, the convex part 7co can be made thinner.

### [Comparative example]

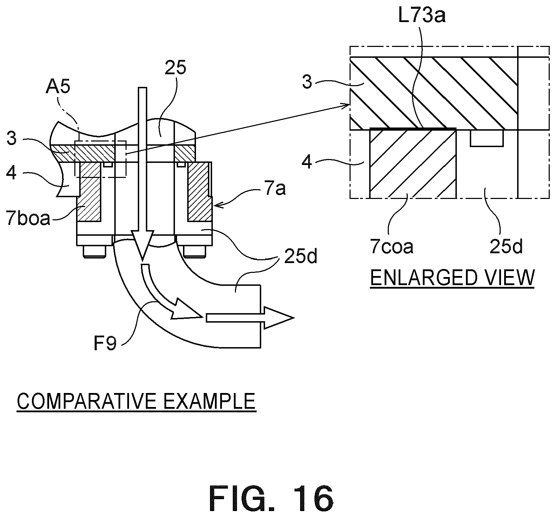

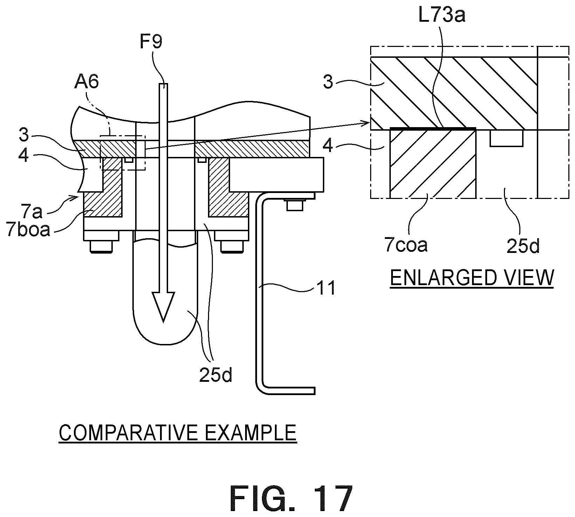

FIGS. 16 and 17 illustrate a comparative example in which the groove part 73S is not provided in the insulating plate 3. FIG. 16 is a cross-sectional view corresponding to the cross-sectional view along the line A-A in FIG. 2. FIG. 17 is a cross-sectional view corresponding to the cross-sectional view along the line B-B in FIG. 2. FIG. 16 also includes an enlarged view of a region A5, and FIG. 17 also includes an enlarged view of a region A6. An insulating joint 7a includes a body 7boa and an upper end part 7coa. As illustrated in FIGS. 16 and 17, in a case where the convex part 7co (see FIGS. 14 and 15) to be inserted into the gap of the concave structure is not provided, a creepage distance L73a in the insulating joint 7a between the metal pipe 25d and the metal plate 4 is the distance in which the upper end part 7coa of the insulating joint 7a is in contact with the insulating plate 3 at its upper end. That is, as the distance of the upper end part of the insulating joint 7a, a distance equal to the distance along the inner surface of the groove part 73S (see FIGS. 14 and 15) is required. As is apparent from this description, in a case where the groove part 73S is not provided in the insulating plate 3, the upper-end side thickness of the upper end part 7coa increases.

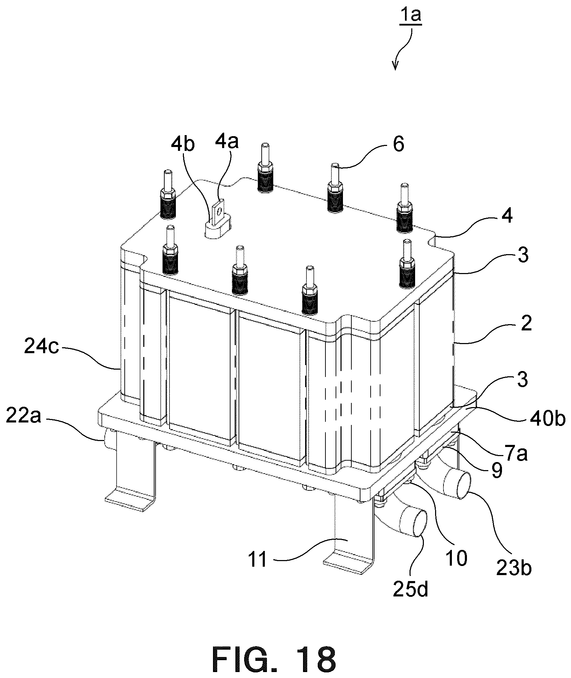

FIG. 18 is a perspective view of the electrochemical cell stack 1 according to the comparative example. In a case of using the insulating joint 7a (see FIGS. 16 and 17), it is necessary to ensure the creepage distance by making the insulating joint 7a thicker. Therefore, the planar size of a metal plate 40b or the like becomes larger. Further, since the potential of the entire stack increases in proportion to the number of cells, the required creepage distance further increases when the number of cells is increased. In contrast to the insulating joint 7a, according to the insulating joint 7 of the present embodiment, the groove part 73S is provided in the insulating plate 3, and the convex part 7co of the insulating joint 7 is inserted into the groove part 73S. Accordingly, the distance along the inner surface of the groove part 73S can serve as the creepage distance, so that increase in the planar size of the electrochemical cell stack 1 can be prevented.

As described above, according to the present embodiment, the metal pipes 22a, 23b, 24c, and 25d used for the inflow or outflow of the anode fluid or the cathode fluid are assembled to the metal plate 4 via the insulating joints 7. Accordingly, also in a case where the metal pipes 22a, 23b, 24c, and 25d are formed of metal, it is possible to electrically insulate the metal plate 4 and each of the metal pipes 22a, 23b, 24c, and 25d from each other.

Further, the annular groove part 73S is provided in the insulating plate 3 along the outer circumference of each of the metal pipes 22a, 23b, 24c, and 25d, and the convex part 7co insertable into the groove part 73S is provided in the insulating joint 7. Accordingly, the distance along the inner surface of the groove part 73S can serve as the creepage distance. Therefore, also in a case where the potential of the anode fluid or the cathode fluid increases with increase in the number of stacked electrochemical cells, it is possible to electrically insulate the metal plate 4, which is at the ground potential, and each of the metal pipes 22a, 23b, 24c, and 25d, which is at the potential of the anode fluid or the cathode fluid, from each other without making the outer diameter of the insulating joint 7 larger.

### (Second embodiment)

The electrochemical cell stack 1 according to a second embodiment is different from the electrochemical cell stack 1 according to the first embodiment in defining the shape of the insulating joint 7 to be changeable depending on the number of stacked electrochemical cells. Differences from the electrochemical cell stack 1 according to the first embodiment are described below.

In the electrochemical cell stack 1, the number of stacked electrochemical cells 2 is changed depending on the purpose. Therefore, in the electrochemical cell stack 1 according to the present embodiment, the clearance distance between the metal plate 4 and each of the metal pipes 22a, 23b, 24c, and 25d is defined in accordance with a voltage in a case where the number of stacked electrochemical cells 2 is the smallest. Further, the creepage distance between the metal plate 4 and each of the metal pipes 22a, 23b, 24c, and 25d is defined in accordance with a voltage in a case where the number of stacked electrochemical cells 2 is the largest.

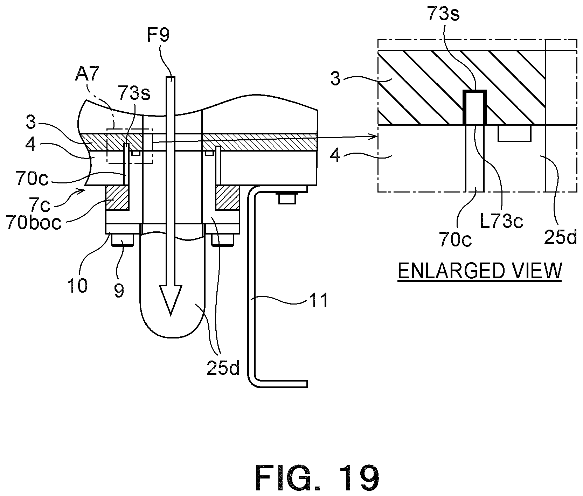

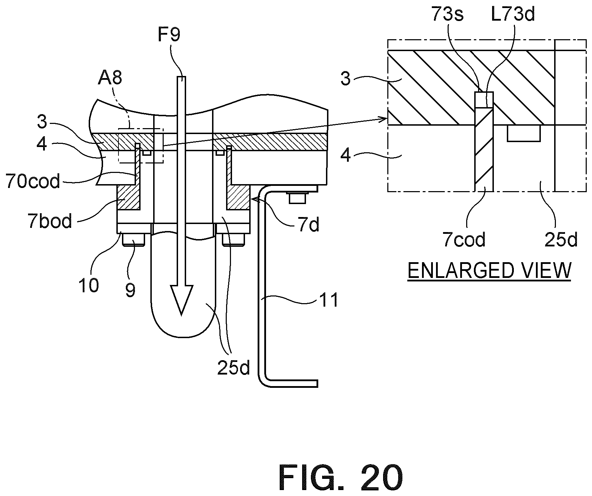

FIG. 19 is a cross-sectional view along the line B-B in FIG. 2, which illustrates an example of an insulating joint 7c not including the convex part 7co. FIG. 20 is a cross-sectional view along the line B-B in FIG. 2, which illustrates an example of an insulating joint 7d including a shorter convex part 7cod. FIG. 19 also includes an enlarged view of a region A7, and FIG. 20 also includes an enlarged view of a region A8.

The configuration illustrated in FIG. 19 is identical to the configuration of the electrochemical cell stack 1 except that the insulating joint 7c is different from the insulating joint 7 (see FIGS. 14 and 15). That is, a cavity region 70c is formed between the metal plate 4 and each metal pipe 22a, 23b, 24c, or 25d. The insulating joint 7c is not inserted into the groove part 73S. In this case, the distance along the inner surface of the groove part 73S of the insulating plate 3 serves as the creepage distance. Meanwhile, the shortest distance of the cavity region 70c and the groove part 73S serves as a clearance distance L73c.

As is apparent from the above descriptions, the number of stacked electrochemical cells 2 is limited to a range in which insulation can be maintained by the clearance distance L73c. In other words, in a case where the number of stacked electrochemical cells 2 is small, the convex part 7co to be inserted into the cavity region 70c and the groove part 73S (see FIGS. 14 and 15) is not necessary. Accordingly, the insulating joint 7c can have a simple shape not including the convex part 7co.

The configuration illustrated in FIG. 20 is identical to the configuration of the electrochemical cell stack 1 except that the length of the convex part 7cod of the insulating joint 7d is shorter than the length of the convex part 7co of the insulating joint 7 (see FIGS. 14 and 15). That is, the convex part 7cod is inserted into the middle of the groove part 73S. In this case, the distance along the inner surface of the groove part 73S of the insulating plate 3 serves as the creepage distance. Meanwhile, the distance between the top of the convex part 7cod and the inlet side end of the groove part 73S serves as a clearance distance L73d. That is, the shortest distance on the surface of the convex part 7cod to be inserted into the groove part 73S serves as the clearance distance L73d.

As is apparent from the above descriptions, the number of stacked electrochemical cells 2 is limited to a range in which insulation can be maintained by the clearance distance L73d. That is, the maximum number max of the number of stacked electrochemical cells 2 is limited by the creepage distance between the metal plate 4 and each metal pipe 22a, 23b, 24c, or 25d, and the clearance distance L73c is defined by the minimum number min of the number of stacked electrochemical cells 2. Further, the length of the convex part 7cod is defined by the maximum number max and the minimum number min of the number of stacked electrochemical cells 2.

As described above, according to the present embodiment, the length of the convex part 7co or 7cod of the insulating joint 7, 7c, or 7d is configured to be changeable depending on the number of stacked electrochemical cells 2. Accordingly, the total amount of the insulating joint 7 can be reduced depending on the number of stacked electrochemical cells 2.

While certain embodiments have been described, these embodiments have been presented by way of example only, and are not intended to limit the scope of the inventions. Indeed, the novel embodiments described herein may be embodied in a variety of other forms and various omissions, substitutions, and changes may be made without departing from the spirit of the inventions. The embodiments and their modifications are intended to be included in the scope and the spirit of the invention and also in the scope of the invention and their equivalents described in the claims.

## Claims

1. An electrochemical cell stack comprising:
a stack of electrochemical cells each including an electrode plate having a separator membrane, an anode electrode arranged on one of main surfaces of the separator membrane, and a cathode electrode arranged on the other one of the main surfaces of the separator membrane, and a flow channel plate stacked on the electrode plate and having an anode flow channel and a cathode flow channel, the anode flow channel being arranged to be opposed to the anode electrode and allowing an anode fluid to flow therein, and the cathode flow channel being arranged to be opposed to the cathode electrode and allowing a cathode fluid to flow therein;
insulating plates of an electrically insulating material arranged on an upper surface and a lower surface of the stack;
metal plates sandwiching the insulating plates from outside;
a metal pipe communicating with a communication hole of the stack through which the anode fluid or the cathode fluid flows into or flows from the electrochemical cells, via a first hole of the insulating plate and a second hole of the metal plate; and
an insulating joint configured to insulate the metal pipe and the metal plate from each other.

2. The electrochemical cell stack of Claim 1, wherein in a flat part of the insulating plate which is surrounded by an end of an inner wall of the second hole of the metal plate, a gap of a concave structure surrounding the first hole of the insulating plate is formed.

3. The electrochemical cell stack of Claim 2, wherein the insulating joint includes
a body connected to an outer circumference of the metal pipe to surround the outer circumference, and
a convex part integrally formed with the body and inserted into the gap of the concave structure, while surrounding a wall surface within the gap in a state of being in contact with the wall surface within the gap.

4. The electrochemical cell stack of Claim 2 or 3, wherein a cavity region is formed between the metal pipe and the second hole of the metal plate.

5. The electrochemical cell stack of Claim 3, wherein a cavity region is formed between the metal pipe and the second hole of the metal plate, and the convex part is inserted into the gap of the concave structure via the cavity region.

6. The electrochemical cell stack of Claim 5, wherein a creepage distance along an inner surface of the gap of the concave structure is formed to be a distance by which the metal pipe and the metal plate are insulated from each other.

7. The electrochemical cell stack of Claim 6, wherein a number of the stacked electrochemical cells is changeable, and a length of the convex part is defined as a length depending on the number of the stacked electrochemical cells.

8. The electrochemical cell stack of Claim 7, wherein the insulating joint has a shape not including the convex part.

9. The electrochemical cell stack of Claim 8, wherein a clearance distance, which is a shortest distance of the gap of the concave structure, is formed to be a distance by which the metal pipe and the metal plate are insulated from each other.

10. The electrochemical cell stack of Claim 9, wherein the clearance distance, which is a shortest distance of the cavity region between the metal pipe and the metal plate, is formed to be the distance by which the metal pipe and the metal plate are insulated from each other.

11. The electrochemical cell stack of any one of Claims 1 to 3, wherein the metal pipe has a same potential as that of either one of the anode fluid and the cathode fluid, and the metal plate is maintained at a ground potential.

12. The electrochemical cell stack of Claim 3, wherein by insertion of the convex part into the gap of the concave structure of the insulating plate, a creepage distance between the metal pipe and the metal plate is formed in a U-shape along the gap of the concave structure.

13. The electrochemical cell stack of any one of Claims 1 to 3, wherein
the electrochemical cells each further include
an electrode-plate outer frame arranged outside the electrode plate, and
a flow-channel-plate outer frame arranged outside the flow channel plate,
the electrode-plate outer frame and the flow-channel-plate outer frame have anode-fluid communication holes communicating with each other in a stacking direction and cathode-fluid communication holes communicating with each other in the stacking direction,
the flow-channel-plate outer frame has either one of an anode communication groove making the anode-fluid communication holes and the anode flow channel of the flow channel plate communicate with each other therethrough and a cathode communication groove making the cathode-fluid communication holes and the cathode flow channel of the flow channel plate communicate with each other therethrough, and
the electrode-plate outer frame has the other one of the anode communication groove and the cathode communication groove.
